Europäisches Patentamt

European Patent Office

Office européen des brevets

(19)

(11) Veröffentlichungsnummer: **0 269 611**
**B1**

(12) **EUROPÄISCHE PATENTSCHRIFT**

(45) Veröffentlichungstag der Patentschrift:
11.04.90

(51) Int. Cl.⁴: **F16D 25/14**

(21) Anmeldenummer: 87890267.5

(22) Anmeldetag: 23.11.87

(54) Zusatzeinrichtung für einen Sattelschlepper.

(30) Priorität: 24.11.86 AT 3123/86

(43) Veröffentlichungstag der Anmeldung:
01.06.88 Patentblatt 88/22

(45) Bekanntmachung des Hinweises auf die Patenterteilung:
11.04.90 Patentblatt 90/15

(84) Benannte Vertragsstaaten:
DE ES FR GB IT NL SE

(56) Entgegenhaltungen:
DE-A- 1 750 889
GB-A- 2 112 100
US-A- 4 567 971

(73) Patentinhaber: STEYR-DAIMLER-PUCH
Aktiengesellschaft, Postfach 62 Franz-Josefs-Kai 51,
A-1011 Wien(AT)

(72) Erfinder: Reif, Johann, Dipl.-Ing. Dr., Sternallee 143,
A-5360 St. Wolfgang(AT)
Erfinder: Mandorfer, Wilhelm, Steyr 222,
A-4594 Steinbach(AT)

ACTORUM AG

## Beschreibung

Die Erfindung betrifft eine Zusatzeinrichtung für einen Sattelschlepper, dessen Fahrkupplung über einen dem Kupplungspedal zugeordneten Geber und wenigstens einen an der Kupplung vorgesehenen Nehmer, die untereinander über eine Leitung verbunden sind, mittels eines Druckmittels betätigbar ist, wobei in der Verbindungsleitung zwischen Geber und Nehmer eine Drossel angeordnet ist.

Das Anfahren von Sattelschleppern mit vergleichsweise geringem Eigengewicht, aber hoher Aufsattellast bereitet, insbesondere auf größeren Steigungen, Schwierigkeiten, weil im Druckmittelsystem zur Kupplungsbetätigung Schwingungen auftreten, die auf das Verhalten des Fahrers zurückzuführen sind. Sobald nämlich die Fahrkupplung durch Nachlassen des getretenen Kupplungspedals Drehmoment zu übertragen beginnt, bäumt sich der Sattelschlepper auf und der Fahrer wird zufolge der Massenträgheit in seinen Sitz gedrückt, womit ungewollt eine Pedalbewegung zum neuerlichen Auskuppeln, also ein Treten des Pedals, verbunden ist. Der Kraftschluß in der Kupplung nimmt daher ab und der Vorderteil des Sattelschleppers senkt sich wieder. Dadurch kuppelt der Fahrer aber wieder ein und diese Vorgänge wiederholen sich, wobei die dadurch auftretenden Schwingungen vom Fahrer ungewollt ausgelöst werden und bisher praktisch ungedämpft ablaufen. Jede Bewegung des Kupplungspedales wird nahezu verlustlos an die Kupplung weitergeleitet. Das Fahrzeug schwingt dann mit rasch wachsender Amplitude durch Resonanz, was letztlich den Abbruch des Anfahrvorganges erzwingt.

Zum Schutz des Motors eines Kraftfahrzeuges vor Drehzahlüberlastung bei unvorsichtigem Herunterschalten des Fahrzeuggetriebes ist bereits eine Vorrichtung zum Sperren des Einrückens einer Fahrzeugkupplung bekannt (GB-A 2 112 100). Dabei ist in der Verbindungsleitung zwischen dem eingangs geschilderten Geber und Nehmer ein von einem Sperrstellglied betätigtes Sperrventil vorgesehen. Zur Verzögerung des Umschaltens des Sperrstellgliedes in die Ruhestellung während einer bestimmten Zeitspanne ist ein eine Drossel enthaltender und das Sperrventil umgehender Bypaß in die Verbindungsleitung einschaltbar. Dadurch wird ein schlagartiges Einrücken der Kupplung vermieden. Die geschilderte Vorrichtung gibt jedoch keine Lehre zur Lösung der Schwierigkeiten wie sie beim Anfahren eines Sattelschleppers auftreten.

Demnach liegt der Erfindung die Aufgabe zugrunde, den eingangs dargelegten Mangel zu beseitigen und eine Zusatzeinrichtung zu schaffen, mit deren Hilfe derartige Schwingungen im wesentlichen vermieden werden und somit dem Fahrer das Anfahren erleichtert wird.

Die Erfindung löst die gestellte Aufgabe dadurch, daß die Drossel bei Überschreiten eines vorbestimmten Wertes des beim Anfahren des Sattelschleppers am Getriebeausgang auftretenden Antriebsdrehmomentes wirksam ist und daß eine Drehmomentmeßeinrichtung zur Bestimmung des beim Anfahren des Sattelschleppers auftretenden Drehmomentes mit der Drossel in Wirkverbindung steht.

Erreicht also das Antriebsdrehmoment einen vorbestimmten hohen Wert, weil eine hohe Aufsattellast vorhanden ist bzw. auf einer größeren Steigung angefahren werden soll, so tritt nunmehr die Drossel in Funktion. Der Fahrer kann dann nach dem ersten Aufbäumen des Schleppers das Kupplungspedal nicht ohne weiteres bzw. nur gegen einen verstärkten Widerstand unbewußt neuerlich niederdrücken, so daß die bisher vom Fahrer ausgelösten Schwingungen gedämpft werden und dadurch der Anfahrvorgang für den Fahrer erleichtert wird. Dabei hat die Drossel aber für den normalen Fahrbetrieb keinen ungünstigen Einfluß, weil sie erst bei Überschreiten des vorbestimmten Antriebsdrehmomentes zur Wirkung kommt, das entsprechend hoch gewählt werden kann.

In weiterer Ausbildung der Erfindung ist der Drossel eine sperrbare Umgehung mit einem der Verbindungsleitung entsprechenden Durchflußquerschnitt zugeordnet. Bei normalem Fahrbetrieb ist die Umgehung offen, so daß die Drossel keine merkbare Wirkung hat. Wird dagegen die Umgehung gesperrt, so ist das Druckmittel gezwungen, die Drossel zu passieren, so daß sich auf diese Weise eine einfache und zweckmäßige Konstruktion ergibt.

Zur Bestimmung des beim Anfahren des Sattelschleppers auftretenden Drehmomentes ist erfindungsgemäß ein Lagefühler für die Drehstellung des im Fahrgestell nachgiebig gelagerten Motor-Getriebeblockes vorgesehen. Selbstverständlich ist dem vorbestimmten Antriebsdrehmoment, bei dem die Drossel zur Wirkung kommen soll, ein entsprechender Drehausschlag des Motor-Getriebeblockes zugeordnet, so daß tatsächlich mit Hilfe des Lagefühlers die Erreichung des vorbestimmten Antriebsdrehmomentes auf einfache Weise festgestellt werden kann.

Der Lagefühler kann als Reed-Relais mit zugehörigem Betätigungsmagneten ausgebildet sein, wobei dann der eine Teil am Motor-Getrieblock und der andere in dessen Verdrehbereich am Fahrgestell des Sattelschleppers angeordnet wird. Es ist aber auch möglich, für den gleichen Zweck Druckfühler zu verwenden, die auf den Lagerdruck des Motor-Getriebeblockes ansprechen, oder andere Drehmomentmeßeinrichtungen, die Dehnungsmeßstreifen enthalten, vorzusehen.

Um die Drossel mit vergleichsweise einfachen technischen Mitteln einschalten zu können und gleichzeitig Fehlschaltungen bzw. ungewollte Einschaltvorgänge sicher zu vermeiden, ist in weiterer Ausbildung der Erfindung zur Sperre der Umgehung eine elektrische Einrichtung vorgesehen, die einen Bewegungsrichtungsfühler des Kupplungspedales aufweist, der nur bei einer dem vollständigen Auskuppeln folgenden Einkuppelbewegung des Kupplungspedales die elektrische Einrichtung in Bereitschaft versetzt, aus der die Sperre dann über den Lagefühler einschaltbar ist.

Dabei ist es besonders zweckmäßig, wenn der Bewegungsrichtungsfühler zwei Schalter umfaßt, die vom Kupplungspedal nahe seiner beiden Endstellungen betätigbar sind.

Um zu vermeiden, daß sich die Drossel beim Einkuppelvorgang vorzeitig ausschaltet, ist für die Sperre ein Haltekreis vorgesehen, der nach Einschalten der Sperre über den Lagefühler den Sperrzustand bis zum Betätigen eines der beiden Schalter des Bewegungsrichtungsfühlers aufrecht erhält.

Es kann vorkommen, daß im Zuge schnell aufeinanderfolgender Schaltvorgänge der Fahrer nach erfolgtem Einkuppeln seinen Fuß noch auf dem Kupplungspedal beläßt und daher der eine dem Kupplungspedal zugeordnete Endschalter noch nicht betätigt ist. Soferne die Sperre vorher über den Lagefühler eingeschaltet war, würde sie dann auch eingeschaltet bleiben, so daß gegen den hohen Widerstand der Drossel ausgekuppelt werden müßte. Um auch dies zu vermeiden, ist die Drossel in Abhängigkeit von der Druckdifferenz zwischen Geber und Nehmer in Durchflußrichtung vom Geber zum Nehmer überbrückbar.

In der Zeichnung ist der Erfindungsgegenstand beispielsweise dargestellt, und zwar zeigen

Fig. 1 das Schaltschema der ganzen Zusatzeinrichtung,
Fig. 2 die Anordnung eines Lagefühlers und
Fig. 3 eine andere Ausbildung der Drossel bzw. Sperre ebenfalls in vereinfachter Schnittdarstellung.

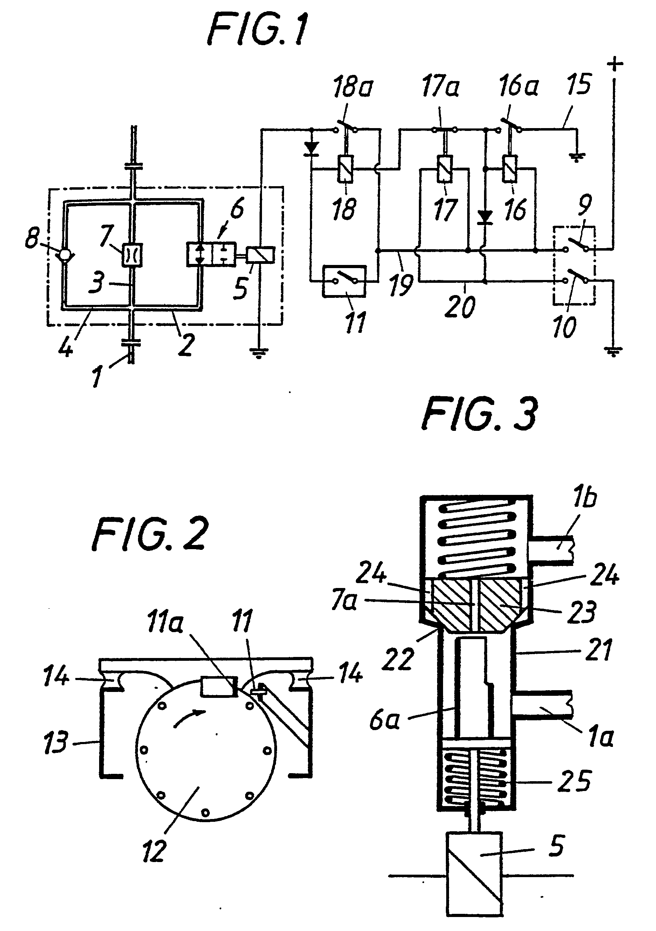

Die Fahrkupplung eines Sattelschleppers ist mittels eines hydraulischen Druckmittels betätigbar, wobei dem Kupplungspedal ein Geber und der Kupplung ein Nehmer zugeordnet sind. Zwischen Geber und Nehmer ist eine Verbindungsleitung 1 vorgesehen, wobei angenommen ist, daß sich gemäß Fig. 1 der Geber unten und der Nehmer oben befinden. Die Verbindungsleitung 1 gabelt sich in drei Zweigleitungen 2, 3, 4, wobei in der Zweigleitung 2 ein durch einen Elektromagneten 5 betätigbarer Sperrschieber 6 eingebaut ist und die Zweigleitung 3 über eine Drossel 7 führt. Im Normalbetrieb (dargestellte Stellung) bildet die Zweigleitung 2 eine Umgehung der Drossel 7, wobei der Durchflußquerschnitt der Zweigleitung 2 jenem der Verbindungsleitung 1 entspricht. In der Zweigleitung 4 ist ein den Rückfluß vom Nehmer zum Geber sperrendes Rückschlagventil 8 vorgesehen, das bei einer bestimmten Druckdifferenz zwischen Geber und Nehmer bei eingeschalteter Drossel 7 öffnet, so daß die Drossel 7 dann überbrückt ist.

Ein Bewegungsrichtungsfühler des Kupplungspedales umfaßt zwei Schalter 9, 10, die vom Kupplungspedal nahe seiner beiden Endstellungen betätigbar sind. Mit 11 ist ein Lagefühler bezeichnet, der zur Bestimmung des beim Anfahren des Sattelschleppers auftretenden Drehmomentes dient. Der Motor-Getriebeblock 12 ist im Fahrgestell 13 über Gummiklötze 14 nachgiebig gelagert (Fig. 2). Dadurch kann sich der Motor-Getriebeblock 12 dem Fahrgestell 13 gegenüber, an dem der Lagefühler 11 befestigt ist, verdrehen. Bei einem Drehausschlag, der dem vorbestimmten Antriebsdrehmoment entspricht, wird dann der Lagefühler 11 im Einschaltsinne betätigt. Der Lagefühler 11 kann als Reed-Relais ausgebildet sein, dessen Betätigungsmagnet 11a am Motor-Getriebeblock 12 sitzt.

Der Schalter 9 ist mit der Betriebsspannung, der Schalter 10 mit Masse verbunden. In einer an Masse angeschlossenen Leitung 15 liegen die Kontakte 16a, 17a, 18a von Relais 16, 17, 18. Die Anschlußleitungen der Schalter 9 und 10 sind mit 19 und 20 bezeichnet. In voll eingekuppeltem Zustand sind beide Schalter 9, 10 geöffnet. Die Relais 16, 17, 18, von denen das Relais 17 als Wechselschalter ausgebildet ist, sind stromlos. Der Sperrschieber 6 befindet sich in der dargestellten Offenstellung, da sein Betätigungsmagnet 5 ebenfalls stromlos ist.

Wird das Kupplungspedal betätigt, so schließt zunächst der Schalter 9 und legt dadurch die Leitung 19 an Betriebsspannung. Es ergibt sich daher eine Teilaktivierung der gesamten elektrischen Einrichtung, wobei aber noch keine Schalt- oder Steuervorgänge stattfinden. Kurz vor Erreichen des voll ausgekuppelten Zustandes schließt auch der Schalter 10 und legt damit die Leitung 20 an Masse. Das Relais 17 zieht kurzzeitig an und öffnet seinen Kontakt 17a. Das Relais 16 wird eingeschaltet und schließt seinen Arbeitskontakt 16a. Es hält sich nun unabhängig von der Stellung des Schalters 10 bis zum Öffnen des Schalters 9 in der angezogenen Stellung. Über den Arbeitskontakt 16a wird zwar Masse auch an den Kontakt 17a gelegt, der sich aber, da das Relais 17 wegen des vorangegangenen Schließens des Schalters 10 angezogen hat, in der Ausschaltstellung befindet, so daß das Relais 18 noch nicht in einem geschlossenen Stromkreis liegt.

Bei beginnendem Einkuppelvorgang wird der Schalter 10 wieder geöffnet. Dadurch fällt das Relais 17 ab, so daß sein Kontakt 17a in die Einschaltstellung gelangt und nun auch das Relais 18 mit Masse verbunden ist. Kommt es bei diesem Schaltzustand zu einem Ansprechen des Lagefühlers 11, so schließt dieser möglichweise auch nur kurzzeitig den Einschaltstromkreis des Relais 18 zur Leitung 19 und zum Schalter 9, wodurch der Kontakt 18a des Relais 18 anzieht und sich das Relais bis zu einem Öffnen des Schalters 9 bzw. bis zu einem noch zu beschreibenden Anziehen des Relais 17 hält.

Bei seinem Anziehen hat das Relais 18 durch seinen Kontakt 18a den Magneten 5 des Sperrschiebers 6 an Spannung gelegt, so daß der Sperrschieber 6 in die Schließstellung gelangt. Es wird daher die Zweigleitung 2 gesperrt und das Druckmittel muß über die Zweigleitung 3 bzw. über die Drossel 7 strömen, wodurch sich die gewünschte Dämpfungswirkung ergibt. Sobald voll eingekuppelt, also das Kupplungspedal in seine Ruhestellung zurückgekehrt ist, hat auch der Schalter 9 wieder geöffnet, wodurch die Relais 16 und 18 sowie der Lagefühler 11 und der Arbeitsmagnet 5 stromlos werden und der Sperrschieber 6 in die dargestellte, die Zweigleitung 2 freigebende Ruhelage gelangt.

Es könnte vorkommen, daß der Fuß des Fahrers nach dem Einkuppeln nicht ganz vom Kupplungspedal abgehoben wird, der Schalter 9 demnach geschlossen bleibt. Der Sperrschieber 6 würde dann bei vorangegangener Aktivierung über den Lagefühler 11 die Zweigleitung 2 sperren und es müßte gegen den hohen Widerstand der Drossel 7 ausgekuppelt werden. Um dies zu vermeiden, ist die Zweigleitung 4 mit dem Rückschlagventil 8 versehen, das bei einem durch Differenzdruck von 3 bis 4 bar zwischen Geber und Nehmer öffnet und somit die Zweigleitung 4 zur Überbrückung der Zweigleitung 3 freigibt. Da aber in der untersten Stellung des Kupplungspedals der Schalter 10 geschlossen ist, spricht dann das Relais 17 an, öffnet den Kontakt 17a und schaltet damit das Relais 18 sowie den Arbeitsmagneten 5 aus.

Fig. 3 zeigt eine besonders zweckmäßige Ausbildung der Sperre und Drossel in der Verbindungsleitung zwischen Geber und Nehmer. Vom Geber führt die Leitung 1a in ein Gehäuse 21, das einen Sitz 22 für einen Ventilkörper 23 bildet, in dem sich die Drosselbohrung 7a befindet. Mit dem Elektromagneten 5 ist eine mit einer seitlichen Öffnung versehene Hülse 6a verbunden, mit der der durch eine Feder belastete Ventilkörper 23 von seinem Sitz 22 abgehoben werden kann. Die Stellung der einzelnen Teile gemäß Fig. 3 entspricht der sich bei angezogenem Elektromagneten 5 ergebenden Lage, d. h. das hydraulische Druckmittel ist gezwungen, seinen Weg durch die Drosselbohrung 7a zu nehmen. Sollte die Druckdifferenz zwischen Geber und Nehmer bzw. den Teilen 1a und 1b der Verbindungsleitung die Kraft der den Ventilkörper 23 belastenden Feder übersteigen, so wird der Ventilkörper von seinem Sitz 22 abgehoben und das Druckmittel kann über die seitlichen Aussparungen 24 des Ventilkörpers ungedrosselt durchströmen. Es ergibt sich hier die gleiche Wirkung wie sie mit dem Rückschlagventil 8 gemäß Fig. 1 erzielt wird. Wird der Elektromagnet 5 stromlos, drückt die stärkere Feder 25 die Hülse 6a nach oben, so daß der Ventilkörper 23 ebenfalls vons seinem Sitz 22 abgehoben und der volle Durchströmquerschnitt freigegeben wird.

## Patentansprüche

1. Zusatzeinrichtung für einen Sattelschlepper, dessen Fahrkupplung über einen dem Kupplungspedal zugeordneten Geber und wenigstens einen an der Kupplung vorgesehenen Nehmer, die untereinander über eine Leitung (1; 1a, 1b) verbunden sind, mittels eines Druckmittels betätigbar ist, wobei in der Verbindungsleitung (1; 1a, 1b) zwischen Geber und Nehmer eine Drossel (7; 7a) angeordnet ist, dadurch gekennzeichnet, daß die Drossel (7; 7a) bei Überschreiten eines vorbestimmten Wertes des beim Anfahren des Sattelschleppers am Getriebeausgang auftretenden Antriebsdrehmomentes wirksam ist und daß eine Drehmomentmeßeinrichtung zur Bestimmung des beim Anfahren des Sattelschleppers auftretenden Drehmomentes mit der Drossel (7; 7a) in Wirkverbindung steht.

2. Zusatzeinrichtung nach Anspruch 1, dadurch gekennzeichnet, daß der Drossel (7; 7a) eine sperrbare Umgehung (2; 24) mit einem der Verbindungsleitung (1; 1a, 1b) entsprechenden Durchflußquerschnitt zugeordnet ist.

3. Zusatzeinrichtung nach Anspruch 1 oder 2, dadurch gekennzeichnet, daß zur Bestimmung des beim Anfahren des Sattelschleppers auftretenden Drehmomentes ein Lagefühler (11) für die Drehstellung des im Fahrgestell (13) nachgiebig gelagerten Motor-Getriebeblockes (12) vorgesehen ist.

4. Zusatzeinrichtung nach Anspruch 3, dadurch gekennzeichnet, daß der Lagefühler (11) als Reed-Relais mit zugehörigem Betätigungsmagneten (11a) ausgebildet ist, wobei der eine Teil (11a) am Motor-Getriebeblock (12) und der andere (11) in dessen Verdrehbereich am Fahrgestell (13) des Sattelschleppers angeordnet ist.

5. Zusatzeinrichtung nach den Ansprüchen 1 bis 4, dadurch gekennzeichnet, daß zur Sperre der Umgehung (2; 24) eine elektrische Einrichtung vorgesehen ist, die einen Bewegungsrichtungsfühler (19) des Kupplungspedales aufweist, der nur bei einer dem vollständigen Auskuppeln folgenden Einkuppelbewegung des Kupplungspedales die elektrische Einrichtung in Bereitschaft versetzt, aus der die Sperre (6; 23) dann über den Lagefühler (11) einschaltbar ist.

6. Zusatzeinrichtung nach Anspruch 5, dadurch gekennzeichnet, daß der Bewegungsrichtungsfühler zwei Schalter (9, 10) umfaßt, die vom Kupplungspedal nahe seiner beiden Endstellungen betätigbar sind.

7. Zusatzeinrichtung nach einem der Ansprüche 1 bis 6, dadurch gekennzeichnet, daß für die Sperre (5, 6; 5, 6a, 23) ein Haltekreis (16, 17, 18) vorgesehen ist, der nach Einschalten der Sperre (5, 6; 5, 6a, 23) über den Lagefühler (11) den Sperrzustand bis zum Betätigen eines der beiden Schalter (9, 10) des Bewegungsrichtungsfühlers aufrecht erhält.

8. Zusatzeinrichtung nach einem der Ansprüche 1 bis 7, dadurch gekennzeichnet, daß die Drossel (7; 7a) in Abhängigkeit von der Druckdifferenz zwischen Geber und Nehmer in Durchflußrichtung vom Geber zum Nehmer überbrückbar ist.

## Revendications

1. Dispositif additionnel pour un tracteur de semi-remorque dont l'embrayage peut être manœuvré à l'aide d'un fluide sous pression par l'intermédiaire d'un émetteur associé à la pédale d'embrayage et d'au moins un récepteur prévu sur l'embrayage, qui sont reliés l'un à l'autre par l'intermédiaire d'une conduite (1; 1a, 1b), dans lequel un étranglement (7 ;7a) est placé sur la conduite de liaison (1; 1a, 1b) entre l'émetteur et le récepteur, caractérisé en ce que l'étranglement (7; 7a) est actif du fait du dépassement d'une valeur prédéterminée du couple moteur apparaissant à la sortie de la boîte de vitesses pendant le démarrage du tracteur de la semi-remorque, et en ce qu'un dispositif de mesure de couple servant à la détermination du couple apparaissant pendant le démarrage du tracteur de la semi-remorque coopère avec l'étranglement (7; 7a).

2. Dispositif selon la revendication 1, caractérisé en ce qu'à l'étranglement (7; 7a) est associée une dérivation (2; 24) pouvant être fermée ayant une section droite de passage correspondant à la conduite de liaison (1; 1a, 1b).

3. Dispositif selon la revendication 1 ou 2, caractérisé en ce que, pour la détermination du couple apparaissant pendant le démarrage du tracteur de la semi-remorque, il est prévu un détecteur de position (11) pour la position dans un sens de rotation de l'ensemble moteur-boîte de vitesses (12) suspendu élastiquement au châssis (13).

4. Dispositif selon la revendication 3, caractérisé en ce que le détecteur de position (11) est constitué par un relais à lame souple Reed avec un aimant de manœuvre (11a) approprié, l'une des parties (11a) étant placée sur l'ensemble moteur-boîte de vitesses (12) et l'autre (11) dans sa zone de rotation sur le châssis (13) du tracteur de la semi-remorque.

5. Dispositif selon les revendications 1 à 4, caractérisé en ce que, pour fermer la conduite de dérivation (2; 24), il est prévu un dispositif électrique qui comporte un détecteur (19) du sens de déplacement de la pédale d'embrayage ne mettant que pour un mouvement d'embrayage de la pédale d'embrayage faisant suite à un débrayage complet le dispositif électrique dans un état préparatoire à partir duquel le moyen de fermeture (6; 23) peut être mis en service, du fait du détecteur de position (11).

6. Dispositif selon la revendication 5, caractérisé en ce que le détecteur du sens de déplacement comprend deux interrupteurs (9, 10) qui peuvent être actionnés par la pédale d'embrayage au voisinage de ses deux positions extrêmes.

7. Dispositif selon l'une des revendications 1 à 6, caractérisé en ce qu'on prévoit pour le moyen de fermeture (5, 6; 5, 6a; 23) un circuit de maintien (16, 17, 18) qui après la mise en service du moyen de fermeture (5, 6; 5, 6a; 23) du fait du détecteur de position (11) maintient l'état de fermeture jusqu'à la manœuvre de l'un des deux interrupteurs (9, 10) du détecteur du sens de déplacement.

8. Dispositif selon l'une des revendications 1 à 7, caractérisé en ce que l'étranglement (7; 7a) peut être court-circuité en fonction de la différence de pression entre l'émetteur et le récepteur dans le sens de circulation de l'émetteur au récepteur.

**Claims**

1. An accessory for a semitrailer tractor, in which the traction clutch is fluid-operable by means of a transmitter, which is associated with the clutch pedal, and at least one receiver, which is provided at the clutch, wherein the transmitter and the receiver are interconnected by a line (1; 1a, 1b), which includes a throttle (7; 7a), characterized in that the throttle (7; 7a) is effective when the starting torque which occurs at the output of the gearbox exceeds a predetermined value as the semitrailer tractor is started and a torque sensor for determining the torque which occurs during the start of the semitrailer tractor is operatively connected to the throttle (7; 7a).

2. An accessory according to claim 1, characterized in that a by-pass (2; 24) which is adapted to be shut off and has a flow area which corresponds to the communicating line (1; 1a, 1b) is associated with the throttle (7; 7a).

3. An accessory according to claim 1 or 2, characterized in that for the determination of the torque which occurs as the semitrailer tractor is started a position detector (11) is provided for detecting the angular position of the engine-gearbox unit (12), which is yieldably mounted in the chassis (13).

4. An accessory according to claim 3, characterized in that the position detector (11) consists of a reed relay provided with an associated actuating magnet (11a), one (11a) of which parts is mounted on the engine-gearbox unit (12) and the other (11) on the chassis (13) of the semitrailer tractor in the range in which said unit can rotate.

5. An accessory according to claims 1 to 4, characterized in that an electric device is provided for shutting off the by-pass (2; 24) and said electrical device comprises a detecotr (19) for detecting the direction of movement of the clutch pedal, which detector causes the electrical device to assume a stand-by condition only when the coupling pedal performs a clutch-engaging movement after a complete disengagement of the clutch, whereas the shut-off valve (6; 23) can be operated by the position detector (11) when the electric device is in its stand-by position.

6. An accessory according to claim 5, characterized in that the direction-of movement sensor comprises two switches (9, 10), which are operable by the clutch pedal close to its two end positions.

7. An accessory according to any of claims 1 to 6, characterized in that a holding circuit (16, 17, 18) is provided for the shut-off valve (5, 6; 5a, 6a, 23) and when the shut-off valve has been rendered operative by means of the position detector (11) the holding circuit will maintain the shut-off condition until one of the two switches (9, 10) of the direction-of-movement detector has been operated.

8. An accessory according to any of claim 1 to 7, characterized in that the throttle (7; 7a) is adapted to be by-passed for a flow in the direction from the transmitter to the receiver in dependence on the pressure difference between the transmitter and receiver.

5

# FIG.1

# FIG. 3

# FIG. 2